# EUROPEAN PATENT APPLICATION

(11) **EP 1 229 502 A1**
(43) Date of publication of application: **07.08.2002**
(21) Application number: 01200344.8
(22) Date of filing: 31.01.2001
(51) Int. Cl.: G07B 15/02

(54) **Parking system allowing or preventing actions to occur after a parking time has expired**

(71) Applicant: Parking Partners Ltd., Blanchardstown, Dublin 15 (IE)
(72) Inventor: Den Hollander, Kees, Blanchardstown, Dublin 15 (IR)
(74) Representative: Jorritsma, Ruurd

(57) **Abstract**

A parking fee system comprising a computer arrangement (2) provided with a processor (1) connected to memory (5, 7, 9, 11) having stored therein:
- parking information related to a parking starting time and maximum parking duration of at least one vehicle (29);
- parking zone information of said vehicle (29);
the processor being arranged to calculate from said parking information and said parking zone information a parking fee to be charged to a driver of said vehicle (29) in accordance with predefined calculation rules,
wherein said processor is also arranged not to allow any further parking in said zone for said vehicle (29) before a first predetermined amount of time has elapsed after said maximum parking duration.

## Description

### Field of the invention

The present invention relates to a parking fee system allowing a driver to perform a wireless parking payment using a wireless device like a mobile telephone.

### Prior art

In such systems known from the prior art, the only functionality provided by the parking system is to send a warning signal to a control unit of an attendant, who checks whether or not a vehicle specified by the attendant has a valid parking permission, to inform him of the parking status of the vehicle.

### Summary of the invention

There is a need to provide such a parking system with more functionality in case a parked vehicle has no or no more parking permission. Such additional functionally may be both directed to the driver of the vehicle and to the attendant.

Therefore, the invention is directed to a parking fee system comprising a computer arrangement provided with a processor connected to memory having stored therein:
- parking information related to a parking starting time and maximum parking duration of at least one vehicle;
- parking zone information of said vehicle;
the processor being arranged to calculate from said parking information and said parking zone information a parking fee to be charged to a driver of said vehicle in accordance with predefined calculation rules,
wherein said processor is also arranged not to allow any further parking in said zone for said vehicle before a first predetermined amount of time has elapsed after said maximum parking duration.

The invention also relates to a parking fee system comprising a computer arrangement provided with a processor connected to memory having stored therein:
- parking information related to a parking permission of at least one vehicle;
- parking zone information of said vehicle;
the processor being arranged to calculate from said parking information and said parking zone information a parking fee to be charged to a driver of said vehicle in accordance with predefined calculation rules,
the processor also being arranged to inform an attendant via a control unit of whether or not a specific vehicle has a permission to park in a zone,
wherein, if said specific vehicle has no permission to park in said zone, the processor provides the attendant with the option to start an enforcement action with the control unit.

In a further embodiment, the invention relates to a method of operating of a parking fee system comprising a computer arrangement provided with a processor connected to memory having stored therein:
- parking information related to a parking starting time and maximum parking duration of at least one vehicle;
- parking zone information of said vehicle;
the method comprising the step of calculating from said parking information and said parking zone information a parking fee to be charged to a driver of said vehicle in accordance with predefined calculation rules,
wherein the method also comprises the step of not to allow any further parking in said zone for said vehicle before a first predetermined amount of time has elapsed after said maximum parking duration.

Finally, the invention relates to a method of operating of a parking fee system comprising a computer arrangement provided with a processor connected to memory having stored therein:
- parking information related to a parking permission of at least one vehicle;
- parking zone information of said vehicle;
the method comprising the step of calculating from said parking information and said parking zone information a parking fee to be charged to a driver of said vehicle in accordance with predefined calculation rules,
and the step of informing an attendant via a control unit of whether or not a specific vehicle has a permission to park in a zone,
wherein, if said specific vehicle has no permission to park in said zone, the method includes the step of providing the attendant with the option to start an enforcement action with the control unit.

### Brief description of the drawings

The invention will be illustrated with reference to some drawings which are only intended to illustrate the invention and not to limit its scope as defined by the accompanying claims.

Figure 1 shows a general overview of some components used in the present invention.

Figure 2 shows a more detailed overview of a computer arrangement used in a payment centre.

### Description of the preferred embodiment

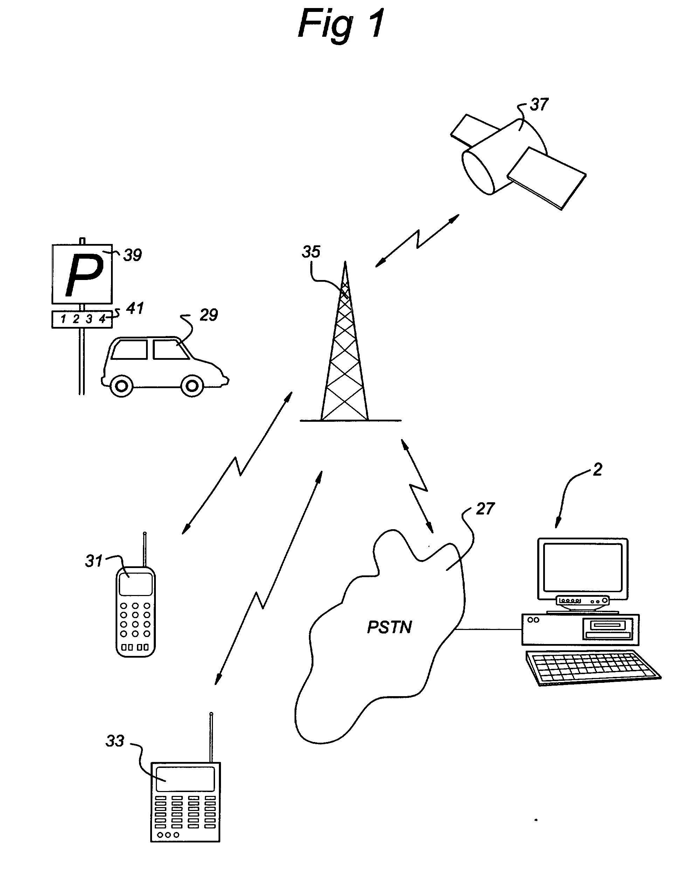

The present invention relates to the field of parking by using some kind of telecommunication device. In figure 1, such a device is shown to be a mobile telephone 31. However, as the case may be, any other kind of communication device may be used. E.g., it is sometimes possible to use a fixed telephone to provide necessary instructions.

Figure 1 shows a car 29 that a driver wishes to park on a desired location for which he has to pay a certain amount of money or for which he needs a parking permit.

Figure 1 also shows a telecommunication mast 35 provided with suitable antenna means to communicate with the mobile telephone 31 and a control unit 33 to be operated by a parking attendant. Through the mast 35 or via other suitable means the mobile telephone 31 and the control unit 33 can communicate with a computer arrangement 2 of a parking provider, that is connected to a telecommunication network like the Public Switched Telecommunication Network (PSTN) 27. The mobile telephone 31 and the control unit 33 may use a GSM or other similar network. Some communications may be routed through a satellite 37 if required.

Parking may be done on a location provided with a parking sign 39 with a parking zone number 41 expressly shown to the public.

The control unit 33 may be arranged such that the attendant when checking whether or a parked vehicle 29 has a permit or has been paid for parking by inputting the number plate value in his control unit 33, for instance, by means of suitable input keys. However, the control unit may, alternatively, be provided with automatic reading means for reading the number plate and then transmitting the number plate value to the computer 2. Instead of using the number plate use may be made of a number or other identification that is linked to the vehicle concerned and that is shown on a separate plate or sheet of paper, or the like, behind one of the car windows and that can be automatically read by the control unit 33. To that end, a bar code or other code can be used. However, such a number may also be in a form legible for the attendant. All this is prior art and not essential to the present invention.

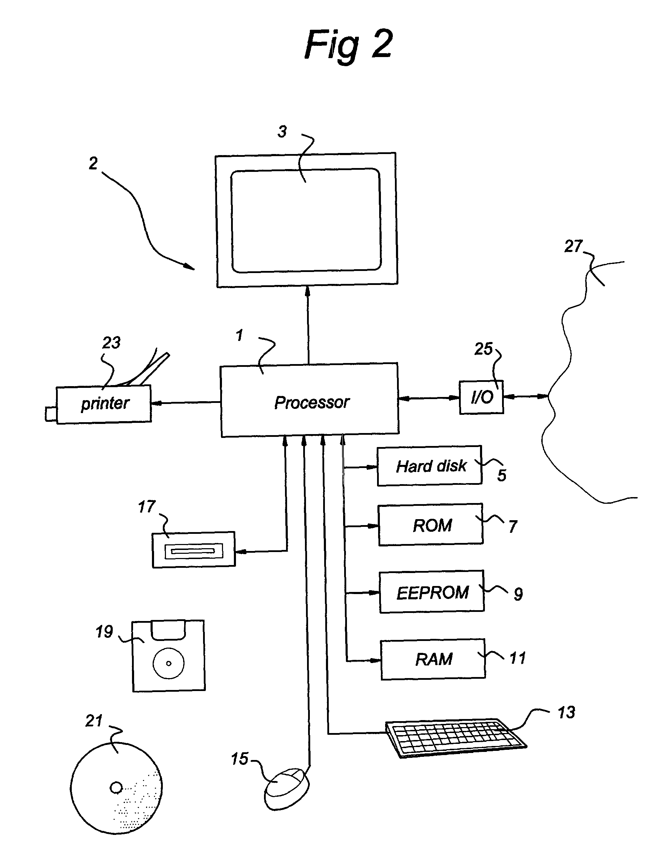

In figure 2, an overview is given of a computer arrangement that can be used to implement the computer 2. The arrangement comprises a processor 1 for carrying out arithmetic operations.

The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to means for inputting instructions, data etc. by a user, like a keyboard 13, and a mouse 15. Other input means, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, etc,. as is known to persons skilled in the art.

The processor 1 is also connected to a printer 23 for printing output data on paper, as well as to a display 3, for instance, a monitor or LCD (Liquid Crystal Display) screen, or any other type of display known to persons skilled in the art.

The processor 1 may be connected to a communication network 27, for instance, the Public Switched Telephone Network (PSTN), a Local Area Network (LAN), a Wide Area Network (WAN), etc. by means of I/O means 25. Connection to network 27 may be physical or wireless. The processor 1 may be arranged to communicate with other communication arrangements through the network 27.

The processor 1 may be implemented as stand alone system, or as a plurality of parallel operating processors each arranged to carry out subtasks of a larger computer program, or as one or more main processors with several subprocessors. Parts of the functionality of the invention may even be carried out by remote processors communicating with processor 1 through the network 27.

Now, a brief description of the functionality of the system shown in figures 1 and 2 is given.

A driver desiring to park his vehicle in a location where he has to pay calls the computer 2 by means of his mobile telephone 31. This call may be set up in any known way. The mobile telephone may e.g. have the telephone number of the computer 2 prestored in his memory (not shown). In one embodiment, he enters his own telephone number, the vehicle number (e.g. the number plate or a number shown on a separate plate behind a car window) and a parking zone number.

However, alternatively, the driver only enters the parking zone number. Then, the computer 2 is arranged to identify the calling driver automatically, e.g., by a Calling Line Identification method. The registration number of the vehicle is then already linked to the telephone number of the calling driver in the memory of the computer 2. Such an automatic system has the advantage of requiring less data to be sent by the driver, however, has the disadvantage of inflexibility since it cannot be used by the driver driving another vehicle than his own.

The time of calling by the driver is the starting time of the parking. When the driver wishes to end the parking time he simply calls the computer 2 again and parking will be terminated automatically. So, the computer can automatically calculate the parking fee in accordance with predetermined rules. For instance, the first hour may be much cheaper than later hours or vice-versa. The computer 2 is arranged to bill the driver for his parking through his telephone bill. To that end, the computer is arranged to, through network 27, automatically contact a computer system (not shown) of the telecommunication provider associated with the mobile telephone 31. Billing may also be done via a bank account after the computer 2 has contacted a bank computer (not shown) via a procedure known by persons skilled in the art.

When the attendant comes to check whether the vehicle 29 has a valid permission to be parked on the parking location he may read the vehicle's number plate (or other code related to the car) and key this, possibly with a parking zone number, into his control unit 33. As clarified above, he may also use an automatic way of reading the vehicle's information from the vehicle if his control unit 33 provides such functionality. The attendant then transmits this information together with the zone number, if any, to the computer 2 that automatically checks whether the vehicle is allowed to be parked on this parking location.

If the vehicle is not allowed to be parked there the parking attendant may issue a parking fine. Alternatively, the attendant may issue a parking ticket for a predetermined time period, the ticket being provided with information to the driver of how to pay the fee for this ticket.

The attendant may be warn of the valid or invalid vehicle's permission to park by means of indication means on the control unit 33, for instance, a red lamp showing that permission is invalid and a green lamp showing a valid permission.

Optionally, in order to protect the system either one or both the driver and the attendant may need a personal identification number to get access to the computer 2.

The telecommunication explained above may, if and where required, use the Internet, SMS messages, and other way of modern telecommunication like the Wireless Application Protocol (WAP) or other protocol with similar functionality.

Although in the system shown in figure 1 use is made of a mobile telephone 31, alternatively, a terminal fixed to the vehicle and having the same or similar functionality may be used.

Instead of using parking zones with zone numbers expressly indicated on signs at the location of parking, modern ways of locating the vehicle can be used. For instance, techniques to automatically locate a mobile telephone can be used, like using the Home Location Register - HLR, Visitor Location Register - VLR, of the mobile telephone network. Alternatively, the vehicle may be provided with a GPS system for automatic traffic guidance. Then, the GPS system can also be used for the automatic parking method.

In accordance with the present invention, the computer arrangement 2 is arranged to support at least one further parking related action after the parking time has expired.

In a first embodiment, the computer 2 does not allow the driver of vehicle 29 to perform a payment to obtain a parking time to exceed a maximum parking duration from the starting time. Even if multiple successive payments are made the maximum duration may not be exceeded. Only after a predetermined amount of time has elapsed can the driver perform another parking payment in the zone concerned. The driver will be informed of this automatically by the computer 2 via the mobile telephone 31, either by voice announcement, WAP mail, SMS, etc.

In a second embodiment, after exceeding the maximum parking duration in a parking zone, the computer 2 does not allow the driver of vehicle 29 to perform a parking payment for that particular zone. However, additionally, the computer 2 does not allow the driver of vehicle 29 to perform a parking payment in one or more of zones surrounding the zone where the vehicle is parked. Only after a pre-determined amount of time has elapsed can this driver perform another parking payment in this zone or one of the surrounding zones. The driver will be informed of this automatically by the computer 2 via the mobile telephone 31, either by voice announcement, WAP mail, SMS, etc.

In a third embodiment, when an attendant has identified an offence which merits follow-up from additional enforcement resources, such as clamping or towing units, he can select a follow-up action presented to him through his display on his control unit 33. Such a selection may be done by any mechanism known in the art, like pushing a button on the control unit 33, operating a cursor or the like on the display, etc. At the same time he can issue an accompanying parking ticket for the vehicle with associated fine. After the selection by the attendant the additional enforcement resources are then automatically notified by the computer arrangement 2 via the telecommunication system shown in figure 1. To that end, the enforcement resources will be provided with a communication device (not shown) also arranged to communicate with other devices through the communication network.

It is to be noted that, this third embodiment is not only applicable in situations where a maximum parking duration has expired but also for vehicles for which the drivers did not register parking at all in computer arrangement 2.

## Claims

1. A parking fee system comprising a computer arrangement (2) provided with a processor (1) connected to memory (5, 7, 9, 11) having stored therein:
• parking information related to a parking starting time and maximum parking duration of at least one vehicle (29);
• parking zone information of said vehicle (29);
the processor being arranged to calculate from said parking information and said parking zone information a parking fee to be charged to a driver of said vehicle (29) in accordance with predefined calculation rules,
wherein said processor is also arranged not to allow any further parking in said zone for said vehicle (29) before a first predetermined amount of time has elapsed after said maximum parking duration.

2. Parking fee system according to claim 1, wherein said processor is also arranged not to allow any further parking in at least one other zone adjacent to said zone for said vehicle (29) before a second predetermined amount of time has elapsed after said maximum parking duration.

3. Parking fee system according to claim 2, wherein said first and second predetermined amounts of time are equal.

4. A parking fee system comprising a computer arrangement (2) provided with a processor (1) connected to memory (5, 7, 9, 11) having stored therein:
• parking information related to a parking permission of at least one vehicle (29);
• parking zone information of said vehicle (29);
the processor being arranged to calculate from said parking information and said parking zone information a parking fee to be charged to a driver of said vehicle (29) in accordance with predefined calculation rules,
the processor also being arranged to inform an attendant via a control unit (33) of whether or not a specific vehicle has a permission to park in a zone,
wherein, if said specific vehicle has no permission to park in said zone, the processor provides the attendant with the option to start an enforcement action with the control unit (33).

5. A method of operating of a parking fee system comprising a computer arrangement (2) provided with a processor (1) connected to memory (5, 7, 9, 11) having stored therein:
• parking information related to a parking starting time and maximum parking duration of at least one vehicle (29);
• parking zone information of said vehicle (29);
the method comprising the step of calculating from said parking information and said parking zone information a parking fee to be charged to a driver of said vehicle (29) in accordance with predefined calculation rules,
wherein the method also comprises the step of not to allow any further parking in said zone for said vehicle (29) before a first predetermined amount of time has elapsed after said maximum parking duration.

6. A method of operating of a parking fee system comprising a computer arrangement (2) provided with a processor (1) connected to memory (5, 7, 9, 11) having stored therein:
• parking information related to a parking permission of at least one vehicle (29);
• parking zone information of said vehicle (29);
the method comprising the step of calculating from said parking information and said parking zone information a parking fee to be charged to a driver of said vehicle (29) in accordance with predefined calculation rules,
and the step of informing an attendant via a control unit (33) of whether or not a specific vehicle has a permission to park in a zone,
wherein, if said specific vehicle has no permission to park in said zone, the method includes the step of providing the attendant with the option to start an enforcement action with the control unit (33).
